# EUROPÄISCHE PATENTSCHRIFT

(11) **EP 4 058 850 B1**
(45) Veröffentlichungstag und Bekanntmachung des Hinweises auf die Patenterteilung: **16.07.2025**
(21) Anmeldenummer: 20792951.4
(22) Anmeldetag: 13.10.2020
(51) Int. Cl.: G03H 1/04, G03H 1/02, B29C 33/42, B29C 37/00, B29C 45/00, B29C 45/14, B29C 45/17, B29C 59/16, B32B 1/00, G03H 1/20, B32B 3/26, B32B 33/00

(54) **VERFAHREN ZUM HERSTELLEN EINER GEBOGENEN SUBSTRATSCHEIBE MIT EINEM HOLOGRAMM, RESULTIERENDE SUBSTRATSCHEIBE MIT HOLOGRAMM UND EIN DIESE ENTHALTENDER SCHEIBENVERBUND, INSBESONDERE FAHRZEUGSCHEIBE**
METHOD FOR PRODUCING A CURVED SUBSTRATE PANEL WITH A HOLOGRAM, RESULTING SUBSTRATE PANEL WITH HOLOGRAM AND A LAMINATE CONTAINING SUCH A SUBSTRATE PANEL, IN PARTICULAR A VEHICLE WINDOW
PROCÉDÉ PERMETTANT DE PRODUIRE UN PANNEAU DE SUBSTRAT INCURVÉ AYANT UN HOLOGRAMME, PANNEAU DE SUBSTRAT RÉSULTANT AYANT UN HOLOGRAMME ET STRATIFIÉ CONTENANT UN TEL PANNEAU DE SUBSTRAT, EN PARTICULIER UNE VITRE DE VÉHICULE

(30) Priorität: 11.11.2019 DE 102019130284
(43) Veröffentlichungstag der Anmeldung: 21.09.2022
(73) Patentinhaber: Bayerische Motoren Werke Aktiengesellschaft, 80809 München (DE)
(72) Erfinder: PINSKER, Martin, 84079 Bruckberg (DE); SOLCHENBACH, Tobias, 80992 München (DE)
(86) Internationale Anmeldenummer: PCT/EP2020/078676
(87) Internationale Veröffentlichungsnummer: WO 2021/094046

(56) Entgegenhaltungen:
- JP-A- H1 110 674
- US-A1- 2017 368 723
- US-B2- 9 321 226

## Beschreibung

### Technisches Gebiet

Die Erfindung betrifft, allgemein gesehen, Verfahren zum Herstellen eines Hologramms und richtet sich dabei insbesondere auf die Integration eines Hologramms zwischen zwei gebogenen Scheiben in einem Scheibenverbund, beispielsweise in einer Fahrzeugscheibe, sowie auf ein damit ausgestattetes Fahrzeug. Das Fahrzeug kann ein beliebiges Land-, Luft- oder Wasserfahrzeug, insbesondere ein Kraftfahrzeug, sein. Beim Hologramm kann es sich insbesondere um ein holografisch optisches Element (HOE) handeln, das beispielsweise als Element einer Blickfeldanzeigevorrichtung in einer Frontscheibe des Fahrzeugs integriert werden soll.

### Technischer Hintergrund

Blickfeldanzeigevorrichtungen in einem Fahrzeug sind insbesondere unter der Bezeichnung Head-Up-Display (HUD) bekannt. Damit wird ein Anzeigeinhalt, beispielsweise eine Angabe über eine Geschwindigkeitsbegrenzung oder andere Navigations- und Fahrzeugbedienungshinweise, in Form eines virtuellen Anzeigebilds dem vom Fahrer beobachteten realen Umgebungsbild vor dem Fahrzeug überlagert. Hierzu umfasst eine Blickfeldanzeigevorrichtung in der Regel eine in der Instrumententafel eingebaute Projektionseinheit, die ein Projektionslichtstrahlenbündel mit gewünschtem Anzeigeinhalt erzeugt und es auf die Frontscheibe des Fahrzeugs projiziert, von welcher es zum Fahrer hin reflektiert wird.

Um dem Fahrer eine Augenanpassung beim Blickwechsel zwischen der vorausliegenden Straße und der abzulesenden Anzeige weitgehend zu ersparen, wird das virtuelle Anzeigebild dabei typischerweise in einiger Entfernung vor dem Fahrzeug erzeugt. Um diese und andere Abbildungseigenschaften zu erreichen, sind Projektionseinheiten bei Head-Up-Displays für den Automobilbereich klassisch mittels konkaver Spiegel aufgebaut, deren Größe jedoch linear mit der Bildgröße des virtuellen Anzeigebilds und eines damit abdeckbaren Blickfelds (auch Field-of-View, FoV genannt) skaliert. Um das abdeckbare Field-of-View beispielsweise für eine an realen Umgebungsobjekten orientierte kontaktanaloge AR-Anzeige (Augmented Reality) deutlich zu erweitern, müsste bei der klassischen HUD-Bauweise ein entsprechend großer Konkavspiegel in der Instrumententafel integriert werden, was zu Problemen für den verfügbaren Bauraum im Fahrzeuginnenraum oder auch für dessen Erscheinungsbild führt, da wiederum eine entsprechend große Öffnung für das austretende Projektionslichtstrahlenbündel in der Instrumententafel erforderlich wäre.

Zur Überwindung derartiger Probleme sind für Blickfeldanzeigevorrichtungen in Kraftfahrzeugen Ansätze bekannt, in die Frontscheibe eines Fahrzeugs ein holografisch optisches Element (HOE) zu integrieren, das beispielsweise die optische Funktion eines für die klassische Projektionseinheit üblichen Konkavspiegels übernimmt. Damit wird eine kompaktere HUD-Bauart ohne Konkavspiegel ermöglicht, die auch als holografisches Head-up-Display bekannt ist. Hierzu ist es beispielsweise aus US 4,998,784 A bekannt, ein Hologramm zunächst als eine flache Folie mit erforderlichen optischen Eigenschaften auf einem separaten flexiblen Substrat herzustellen und dann zwischen zwei Glasscheiben eines für Fahrzeugscheiben typischen VSG-Aufbaus (Verbund-Sicherheitsglas) mithilfe eines diese verbindenden Schmelzklebstoffs PVB (Polyvinylbutyral) einzulaminieren. Das flexible Substrat, auf dem das Hologramm ursprünglich erzeugt wurde, wird dabei noch vor dem endgültigen Laminationsvorgang von dem Hologramm abgezogen oder chemisch aufgelöst und ist somit nicht in der resultierenden Fahrzeugscheibe enthalten.

Beim Laminieren von derartigen fertigen HOE-Folien in einem Scheibenverbund sind sie allerdings hohen Drücken und Temperaturen ausgesetzt, welche sich negativ auf die Materialeigenschaften und die Beständigkeit des Hologramms auswirken können. Dabei ist das Laminieren eines meist in einem Rolle-zu-Rolle-Prozess als flacher Film oder flache Folie hergestellten Hologramms in eine 3D-gebogene Geometrie einer Fahrzeugscheibe in der Regel nicht ohne Knittern oder Faltenwerfen der HOE-Folie möglich. Dies kann zu erheblichen Beeinträchtigungen der optischen Funktion des Hologramms führen.

Alle Versuche, ein hologrammaufnahmefähiges Material, etwa in Form einer holographischen Folie, noch vor dem Belichten in ein Verbundglas zu laminieren und erst danach dort ein Hologramm bzw. ein HOE einzubelichten, erfordern massive Eingriffe in den Verbundglas-Herstellungsprozess und sind aufgrund der Anforderungen des Belichtungsprozesses wie Temperaturstabilität, Vibrationsfreiheit, dunkle Umgebung etc. kaum industriell umsetzbar.

Andererseits ist insbesondere für Banknoten oder Ausweisdokumente eine Hologrammherstellungsmethode durch Anfertigung sogenannter "Kontaktkopien" als besonders sinnvoll für eine Massenanfertigung bekannt. Dabei wird eine Hologrammaufnahmeschicht aus einem Fotopolymer flüssig auf ein Substrat, beispielsweise einen Film oder eine Folie, aufgebracht und im direkten Kontakt mit einem Master-Hologramm (auch Holografie-Master genannt) in Reflexion belichtet und dadurch kopiert, d. h. repliziert. Mit anderen Worten wird dabei ein Holografie-Master, der in der Regel ein Oberflächenhologramm ist, für die wiederholte Herstellung eines Hologramms verwendet, das in der Regel als ein Volumenhologramm in der Fotopolymerschicht ausgebildet wird. Erst bei der Belichtung und einer anschließenden Fixierung mit UV-Licht härtet das flüssige Fotopolymer aus.

Die Schichtdicke des flüssigen Fotopolymers ist bei dieser Methode mit einer Genauigkeit von unter 10 Mikrometern einzustellen. In diesem Zusammenhang spielen geometrische Toleranzen zwischen dem Substrat und dem Holografie-Master eine große Rolle, da zum einen der Master für die Dauer der Hologrammaufnahme vollflächig in Kontakt mit dem Fotopolymer sein muss und zum anderen der Abstand von Master und Substrat die genannte Schichtdicke der Fotopolymerschicht bestimmt. Bei einer ebenen Geometrie können die für die Hologrammaufnahme erforderlichen konstanten Abstände zwischen einem flachen Substrat und einem flachen Holografie-Master problemlos präzise eingestellt werden, etwa in einem Rolle-zu-Rolle-Prozess. Bei bekannten Verfahren ist das Substrat in der Regel als ein flacher Film oder als eine flache Folie, d. h. nicht gebogen, ausgebildet, während der Holografie-Master in der Regel ein metallisches, steifes Bauteil ist, welches nicht flexibel ist und somit keine Substrattoleranzen ausgleichen kann. Weiterhin sind die Prozesszeiten einer derartigen Hologramm-Replikation kaum mit einem industriellen Glasherstellungsprozess, etwa mit dem obigen VSG-Aufbau, kompatibel.

Eine Integration eines holografisch optischen Elements in/auf eine als ESG (Einscheiben-Sicherheitsglas) ausgebildete Fahrzeugscheibe ist bisher nicht möglich, da ein flüssiges Fotopolymer auf eine dreidimensional gebogene ESG-Scheibe nicht appliziert bzw. ein Holografie-Master nicht mit erforderlicher Kontaktfläche etc. dagegen gehalten werden kann und eine separat hergestellte HOE-Folie auch nicht einfach auf eine ESG-Scheibe aufgeklebt werden kann, da unter anderem die erforderliche Haltbarkeit des Hologramms gegenüber der Alterung auf diese Weise nicht gegeben ist.

Es ist Aufgabe der vorliegenden Erfindung, zur Lösung der obigen Probleme ein alternatives oder verbessertes Verfahren zum Herstellen eines Hologramms anzugeben, das dessen Integration in einem Scheibenverbund mit dreidimensional gebogenen Scheiben, insbesondere in einer Fahrzeugscheibe, ermöglicht. Es ist auch Aufgabe der Erfindung, einen entsprechenden Scheibenverbund und ein damit ausgestattetes Fahrzeug anzugeben.

US 9 321 226 B2 offenbart ein Verfahren zur Herstellung und zur mechanischen und/oder optischen Funktionalisierung eines optisch transparenten Bestandteils einer Uhr.

US 2017/368723 A1 offenbart ein Verfahren zur Herstellung eines optischen Gussteils mit mindestens einem volumenholographischen optischen Element durch mindestens einen Gussvorgang.

### Offenbarung der Erfindung

Diese Aufgabe wird durch ein Verfahren zum Herstellen einer gebogenen Substratscheibe mit einem Hologramm gemäß Anspruch 1 sowie eine resultierende gebogene Substratscheibe mit Hologramm, eine diese enthaltende Fahrzeugscheibe und ein damit ausgestattetes Fahrzeug gemäß den nebengeordneten Ansprüchen gelöst. Weitere Ausgestaltungen sind in den abhängigen Ansprüchen angegeben. Alle in den Ansprüchen und der Beschreibung für das Verfahren genannten weiterführenden Merkmale und Wirkungen gelten auch in Bezug auf die nach diesem Verfahren hergestellte Substratscheibe mit Hologramm, die Fahrzeugscheibe und das Fahrzeug, wie auch umgekehrt.

Gemäß einem ersten Aspekt ist ein Verfahren zum Herstellen einer gebogenen Substratscheibe mit einem Hologramm vorgesehen. Die gebogene Substratscheibe kann dabei insbesondere als fester Bestandteil eines zukünftigen Bauteils, etwa einer Fahrzeugscheibe, dienen, das mit dem Hologramm ausgestattet werden soll, und besitzt daher eine von flacher oder ebener Geometrie abweichende dreidimensional gebogene geometrische Form dieses Bauteils. Die gebogene Substratscheibe kann grundsätzlich aus jedem für das hierin beschriebene Herstellungsverfahren geeigneten Material gefertigt sein, insbesondere aus Kunststoff, beispielsweise aus Polycarbonat.

Beim Hologramm kann es sich insbesondere um ein holografisch optisches Element (HOE) handeln, das beispielsweise als Element einer Blickfeldanzeigevorrichtung der eingangs beschriebenen Art, insbesondere eines Head-Up-Displays (HUD), in einer Frontscheibe des Fahrzeugs integriert werden soll, um etwa die Funktion eines Konkavspiegels zu übernehmen. Alternativ sind mit dem vorliegenden Hologrammherstellungsverfahren auch andere optische Funktionen des auf der gebogenen Substratscheibe erzeugten HOE realisierbar, beispielsweise ein winkelselektives Diffusor-Hologramm zur Darstellung von Anzeigeinhalten direkt auf der resultierenden (Fahrzeug-)Scheibe, die dadurch als eine Art Leinwand dienen kann, oder ein Auskoppel-Hologramm für ein Waveguide-HUD, bei dem ein flächiges Waveguide in der Frontscheibe zur Darstellung von Inhalten ausgebildet ist. Das Fahrzeug kann dabei ein beliebiges Land-, Luft- oder Wasserfahrzeug, insbesondere ein Kraftfahrzeug, sein.

Das Verfahren umfasst dabei folgende Schritte, die - wenn nicht anders vermerkt - insbesondere in der angegebenen Reihenfolge nacheinander durchgeführt werden können:
- Herstellen einer gebogenen Substratscheibe durch Umformen, Spritzgießen oder Spritzprägen zwischen einer ersten Formwerkzeughälfte, die eine vorbestimmte gebogene Soll-Geometrie einer mit dem Hologramm auszustattenden Substratoberfläche definiert, und einer an der ersten Formwerkzeughälfte trennbar fixierten und ihr gegenüberliegenden zweiten Formwerkzeughälfte, die eine Substratrückseite definiert;
- Abnehmen der ersten Formwerkzeughälfte von der zweiten Formwerkzeughälfte, in der die so hergestellte Substratscheibe verbleibt;
- Aufbringen eines Holografie-Masters in Form einer Dünnschicht, insbesondere einer im Wesentlichen konstanten Dünnschichtdicke, auf eine die Soll-Geometrie definierende Oberfläche der abgenommenen ersten Formwerkzeughälfte. Der beispielsweise als eine flexible Dünnschicht ausgebildete Holografie-Master folgt dabei der vorbestimmten Soll-Geometrie dieser Oberfläche der ersten Formwerkzeughälfte. Alternativ kann hier eine die erste Formwerkzeughälfte zu ersetzende weitere Formwerkzeughälfte bereitgestellt werden, in deren dieselbe vorbestimmte Soll-Geometrie definierenden Oberfläche ein Holografie-Master in ähnlicher Weise permanent integriert sein kann;
- Fixieren der ersten bzw. weiteren Formwerkzeughälfte mit dem darin auf diese Weise integrierten Holografie-Master an der zweiten Formwerkzeughälfte derart, dass ein leerer Spalt einer vorbestimmten, im Wesentlichen konstanten Dicke zwischen dem Holografie-Master und der Substratoberfläche bleibt, und Ausfüllen dieses Spalts mit einem Hologrammaufnahmematerial, insbesondere einem flüssigen Fotopolymer, so dass eine Hologrammaufnahmeschicht einer entsprechenden im Wesentlichen konstanten Schichtdicke mit durchgehendem Flächenkontakt zum Holografie-Master gebildet wird;
- Belichten der so auf der Substratoberfläche gebildeten Hologrammaufnahmeschicht mit einem kohärenten Licht in einer für die Dauer der Belichtung weiter bestehenden, insbesondere zur Gewährleistung einer erforderlichen Vibrationsfreiheit zusätzlich fixierten, Hologrammaufnahmeanordnung, bei der die Hologrammaufnahmeschicht einen durchgehenden Flächenkontakt mit dem Holografie-Master und eine der vorbestimmten Dicke des Spalts entsprechende konstante Schichtdicke hat, damit ein durch den Holografie-Master definiertes Hologramms in der Hologrammaufnahmeschicht ausgebildet wird.

Die Belichtung kann beispielsweise rückseitig durch die Substratscheibe hindurch, d. h. in Reflexion, implementiert sein. Insbesondere kann dabei der Holografie-Master als ein Oberflächenhologramm ausgebildet sein. Das Hologramm kann insbesondere als ein Volumenhologramm in der Hologrammaufnahmeschicht ausgebildet werden, indem es, wie beschrieben, im direkten Kontakt mit dem Holografie-Master in Reflexion belichtet und dadurch kopiert, d. h. repliziert wird. Neben seiner Funktion als Hologramm-Negativ kann der gegen die Hologrammaufnahmeschicht mittels der ersten oder der weiteren Formwerkzeughälfte gehaltene Holografie-Master auch zur Gewährleistung der erforderlichen Vibrationsfreiheit für die Dauer der Belichtung beitragen, die je nach Anwendung bis zu einigen Minuten betragen kann.

Je nach verwendetem Hologrammaufnahmematerial kann die Hologrammaufnahmeschicht anschließend beispielsweise mit geeignetem inkohärentem Licht, etwa mit UV-Licht, fixiert werden. Erst bei der Belichtung und einer anschließenden Fixierung mit UV-Licht härtet beispielsweise das flüssige Fotopolymer aus. Nach der beschriebenen Fertigstellung des Hologramms in der Hologrammaufnahmeschicht wird der Holografie-Master von dieser wieder entfernt, indem die erste bzw. weitere Formwerkzeughälfte, die den Holografie-Master trägt, von der Substratscheibe entfernt wird. Das fertige Produkt umfasst nach dem Entfernen beider Formwerkzeughälften die gebogene Substratscheibe mit der auf deren Substratoberfläche ausgebildeten und mit dieser verbundenen Hologrammaufnahmeschicht, in der das Hologramm ausgebildet ist.

Der vorliegenden Erfindung liegt die Erkenntnis zugrunde, dass bei Umform-, Spritzguss- oder Spritzprägeverfahren die Geometrie des Bauteils, beispielsweise einer gebogenen Kunststoff-Substratscheibe, exakt durch die Werkzeuggeometrie bestimmt wird, solange das hergestellte Bauteil im Formwerkzeug verbleibt. Toleranzen ergeben sich hingegen in der Regel erst nach der Entnahme des Bauteils aus dem Formwerkzeug. Ähnlich einer zur herkömmlichen Fahrzeugverglasung, beispielsweise für die Frontscheibe, bestimmten einzelnen Glasscheibe würde eine fertige Kunststoffscheibe der gleichen Größe und Geometrie typischerweise Geometrietoleranzen von mehreren Zehntel Millimetern unterliegen. Die Schichtdicke der Hologrammaufnahmeschicht, insbesondere des flüssigen Fotopolymers, ist aber bei der vorliegenden Hologrammaufnahmemethode mit einer Genauigkeit von unter 10 Mikrometern einzustellen, d. h. 10 bis 100mal genauer als die typische Geometrietoleranz einer fertigen Substratscheibe. Eine derartige Geometrietoleranzabweichung zwischen der Substratscheibe und dem Holografie-Master wäre jedoch nicht hinnehmbar, da zum einen der Holografie-Master für die Dauer der Hologrammaufnahme vollflächig in Kontakt mit der Hologrammaufnahmeschicht sein muss und zum anderen der Abstand von Holografie-Master und Substratscheibe die genannte Schichtdicke der Hologrammaufnahmeschicht bestimmt.

Eine Idee des vorliegenden Verfahrens besteht nun darin, den Holographie-Master in ein Formwerkzeug, in dem die gebogene Substratscheibe hergestellt wird, zu integrieren und die Hologramm-Replikation direkt im Anschluss an den Umform-, Spritzguss- oder Spritzpräge-Vorgang durchzuführen, d. h. während die gebogene Substratscheibe noch zumindest teilweise im Formwerkzeug ist. Auf diese Weise können sowohl oben genannte Toleranzanforderungen zwischen dem Holografie-Master und der Substratoberfläche als auch eine für industrielle Anwendungen erforderliche Kompatibilität der Prozesszeiten für die Scheiben- und Hologrammherstellung erfüllt werden.

Weiterhin wird damit die Hologrammherstellung direkt auf einer dreidimensional gebogenen Substratscheibe ermöglicht, die Teil eines zukünftigen Bauteils wie einer Fahrzeugscheibe bildet, sodass das Hologramm gleich in der endgültigen Geometrie des Bauteils hergestellt wird und nicht nachträglich darauf laminiert und verformt werden muss, wie bei eingangs erwähnten herkömmlichen Verfahren. Zudem wird das Hologramm beim vorliegenden Verfahren auch gleich auf dem endgültigen Substrat hergestellt, das nicht später entfernt werden muss, und ist dadurch zusätzlich gegen etwaige Beschädigungen bei der späteren Handhabung in der Bauteilherstellung geschützt.

Gemäß einer ersten Ausführungsform wird das Belichten des Hologrammaufnahmematerials in einem geschlossenen Zustand des Formwerkzeugs durchgeführt, bei dem die gebogene Substratscheibe mit der darauf gebildeten Hologrammaufnahmeschicht zwischen den beiden aneinander fixierten Formwerkzeughälften fixiert ist, d. h. zwischen der ersten bzw. weiteren Formwerkzeughälfte, in der der Holografie-Master integriert ist, und der zweiten Formwerkzeughälfte, in der die Substratscheibe hergestellt worden ist und noch nicht daraus entnommen wurde. Dadurch kann die Substratscheibe beim Belichtungsvorgang insbesondere von allen Seiten durch das Formwerkzeug fixiert sein und daher keine oder für die oben genannten Zwecke vernachlässigbare geometrische Abweichungen zur Werkzeug-Geometrie haben.

Dabei können in der zweiten Formwerkzeughälfte und/oder in der ersten bzw. der weiteren Formwerkzeughälfte geeignete Belichtungselemente, insbesondere Lichtleiter wie Glasfaser etc. und/oder eine geeignete Belichtungsoptik an sich bekannter Art, integriert sein, die zum Belichten der Hologrammaufnahmeschicht mit einem kohärenten Licht zum Ausbilden eines durch den Holografie-Master definierten Hologramms ausgebildet sind.

Gemäß einer hierzu alternativen zweiten Ausführungsform wird die Substratscheibe nach dem Einbringen des Hologrammaufnahmematerials in den zwischen der Substratoberfläche und dem Holografie-Master gebildeten Spalt in dieser Hologrammaufnahmeposition bezüglich der ersten bzw. weiteren Formwerkzeughälfte gehalten oder fixiert, sodass die zweite Formwerkzeughälfte von der Rückseite der Substratscheibe entfernt werden kann, ohne die gegenseitige Anordnung der Substratscheibe mit der darauf ausgebildeten Hologrammaufnahmeschicht einerseits und des Holografie-Masters einerseits zu verändern. Das Belichten des Hologrammaufnahmematerials wird anschließend in dieser Hologrammaufnahmeposition durch die Substratscheibe hindurch mittels einer an oder hinter deren Rückseite angeordneten Lichtquelle durchgeführt.

Gemäß einem weiteren Aspekt der Erfindung gemäß Anspruch 8 ist eine gebogene Substratscheibe vorgesehen, die gemäß einem Verfahren der hierin dargelegten Art mit einem auf deren Substratoberfläche erzeugten Hologramm hergestellt worden ist. Die gebogene Substratscheibe ist dabei zum Einsatz als fester Bestandteil einer Fahrzeugscheibe ausgebildet. Beim Hologramm kann es sich insbesondere um ein holografisch optisches Element handeln. Dabei kann die gebogene Substratscheibe insbesondere aus Kunststoff durch Umformen, Spritzgießen oder Spritzprägen zwischen einer ersten Formwerkzeughälfte, die eine vorbestimmte Soll-Geometrie der Substratoberfläche definiert, und einer an der ersten Formwerkzeughälfte trennbar fixierten und ihr gegenüberliegenden zweiten Formwerkzeughälfte hergestellt worden sein. Danach ist die erste Formwerkzeughälfte von der hergestellten und in der zweiten Formwerkzeughälfte verbleibenden Substratscheibe entfernt und durch dieselbe oder eine weitere Formwerkzeughälfte ersetzt worden, in deren die Soll-Geometrie definierenden Oberfläche ein Holografie-Master integriert ist/war. Danach ist eine Hologrammaufnahmeschicht auf der in der zweiten Formwerkzeughälfte verbleibenden Substratscheibe durch das Ausfüllen eines Spalts einer vorbestimmten konstanten Dicke zwischen dem Holografie-Master und der Substratoberfläche mit einem Hologrammaufnahmematerial, insbesondere einem flüssigen Fotopolymer, gebildet worden. Danach ist das Hologramm, insbesondere als ein Volumenhologramm, in dieser Hologrammaufnahmeschicht durch deren Belichtung mit einem kohärenten Licht in einer für die Dauer der Belichtung weiter bestehenden, insbesondere extra fixierten, Hologrammaufnahmeposition mit einem durchgehenden Flächenkontakt mit dem Holografie-Master und einer dem Spalt entsprechenden vorbestimmten konstanten Dicke der Hologrammaufnahmeschicht erzeugt worden.

Gemäß einem weiteren Aspekt der Erfindung ist eine Fahrzeugscheibe vorgesehen, die als ein Scheibenverbund ausgebildet ist. Der Scheibenverbund umfasst zum einen eine gebogene Substratscheibe mit einem darauf erzeugten Hologramm der hierin dargelegten Art als eine erste Scheibe des Scheibenverbunds. Ferner umfasst der Scheibenverbund eine zweite Scheibe, die mit der ersten Scheibe durch eine dazwischen liegende Verbindungsschicht, insbesondere aus einem Schmelzklebstoff wie PVB (Polyvinylbutyral), verbunden ist, wobei das Hologramm auf einer der zweiten Scheibe zugewandten Oberfläche der ersten Scheibe ausgebildet ist. Die zweite Scheibe kann beispielsweise eine Glasscheibe, insbesondere eine herkömmliche ESG-Scheibe (Einscheiben-Sicherheitsglas), sein. Mit einer zweiten Scheibe aus Glas ergibt sich anstelle eines herkömmlichen Verbund-Sicherheitsglas-Aufbaus (VSG) der eingangs genannten Art ein hybrider Glas-Kunststoff-Aufbau. Die genannte Verbindung der beiden Scheiben des Verbunds kann insbesondere durch einen geeigneten Laminationsprozess an sich bekannter Art implementiert sein.

Im Unterschied zum herkömmlichen Verbundglas mit dem Schichtaufbau "Glas / PVB-Folie / Glas" kann der resultierende Scheibenverbund beispielsweise den genannten hybrider Glas-Kunststoff-Aufbau mit den Schichten "Glas / PVB-Folie / Hologrammschicht / Kunststoffsubstratscheibe / Oberflächenvergütung" haben. Dabei kann eine Oberflächenvergütung, wie z. B. ein Hardcoat für eine bessere Materialbeständigkeit beispielsweise gegen Kratzer, insbesondere zum Innenraum eines Fahrzeugs hin optional vorgesehen sein. Die Kunststoff-Substratscheibe kann dabei beispielsweise aus Polycarbonat bestehen.

Gemäß einem weiteren Aspekt der Erfindung ist ein Fahrzeug mit einer Fahrzeugscheibe der oben beschriebenen Art vorgesehen. Das Fahrzeug kann ein beliebiges Land-, Luft- oder Wasserfahrzeug, insbesondere ein Kraftfahrzeug, sein. Dabei kann die oben genannte erste Scheibe des Verbunds, an der das Hologramm mit dem Verfahren der hierin dargelegten Art erzeugt ist, insbesondere eine näher oder direkt an einem Fahrzeuginnenraum liegende Innenscheibe der Fahrzeugscheibe sein, während die zweite Scheibe eine näher oder direkt an der Außenumgebung des Fahrzeugs liegende Außenscheibe der Fahrzeugscheibe ist. Die Fahrzeugscheibe kann, muss aber nicht, zusätzlich zu den genannten zwei Scheiben noch weiter innen oder außen im Scheibenverbund liegende Schichten oder Scheiben aufweisen.

Beim Hologramm kann es sich dabei insbesondere um ein holografisch optisches Element (HOE) handeln, das beispielsweise als Element einer Blickfeldanzeigevorrichtung der eingangs beschriebenen Art, insbesondere eines Head-Up-Displays (HUD), in einer Frontscheibe des Fahrzeugs integriert ist, um etwa die Funktion eines Konkavspiegels zu übernehmen. Alternativ kann das HOE mit einer anderen optischen Funktion ausgestattet sein, beispielsweise als ein winkelselektives Diffusor-Hologramm zur Darstellung von Anzeigeinhalten direkt auf der Fahrzeugscheibe, die dadurch als eine Art Leinwand verwendet werden kann, oder als ein Auskoppel-Hologramm für ein Waveguide-HUD, bei dem ein flächiges Waveguide in der Fahrzeugscheibe zur Darstellung von Inhalten für Insassen des Fahrzeugs ausgebildet ist.

### Kurzbeschreibung der Zeichnungen

Die obigen Aspekte der Erfindung und deren Ausführungsformen und spezifische Ausgestaltungen werden nachfolgend anhand der in den beigefügten Zeichnungen dargestellten Beispiele näher erläutert. Die Zeichnungen sind rein schematisch, sie sind insbesondere nicht als maßstabsgetreu zu lesen. Es zeigen:
- Figur 1: ein Flussdiagramm eines Verfahrens der hierin dargelegten Art zum Herstellen einer gebogenen Substratscheibe mit einem Hologramm; und
- Figuren 2a-2d: schematische seitliche Querschnittsansichten einer gemäß dem Verfahren der Fig. 1 zwischen zwei separat abnehmbaren Formwerkzeughälften durch Umformen, Spritzgießen oder Spritzprägen hergestellten gebogenen Substratscheibe mit darauf erzeugtem Hologramm zur Erläuterung einzelner Verfahrensschritte eines spezifischen Beispiels.

### Beschreibung von Ausführungsformen

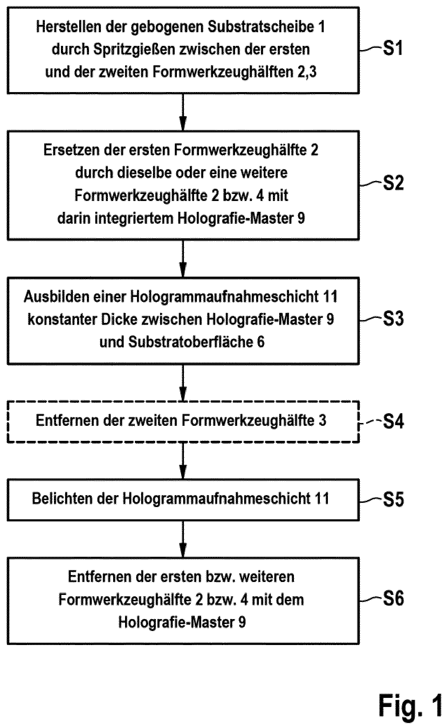

Alle weiter oben in der Beschreibung und in den nachfolgenden Ansprüchen erwähnten verschiedenen Ausführungsformen, Varianten und spezifischen Ausgestaltungsmerkmale des Verfahrens gemäß dem ersten Aspekt der Erfindung zum Herstellen einer gebogenen Substratscheibe mit einem Hologramm und der resultierenden Substratscheibe, der Fahrzeugscheibe und des Fahrzeugs gemäß den weiteren Aspekten der Erfindung können bei den in den in den Figuren 1 bis 2d gezeigten Beispielen implementiert sein. Sie werden daher nachfolgend nicht alle nochmals wiederholt. Das Gleiche gilt entsprechend für die weiter oben bereits angegebenen Begriffsdefinitionen und Wirkungen in Bezug auf einzelne Merkmale, die in den Fig. 1-2d gezeigt sind.

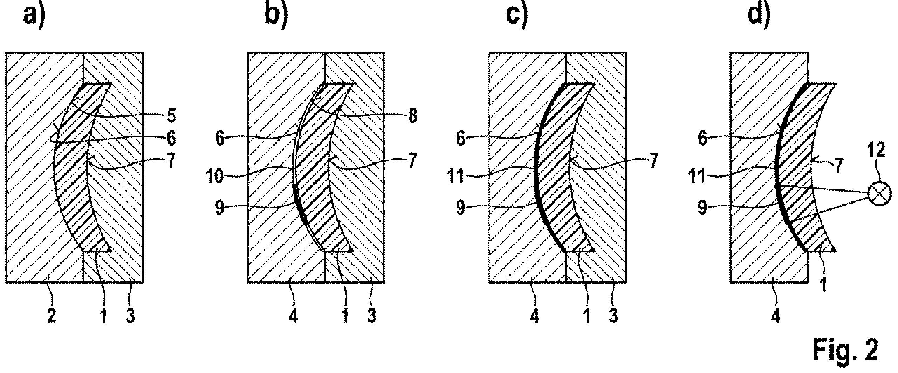

Fig. 1 zeigt ein Flussdiagramm des Verfahrens gemäß dem obigen ersten Aspekt der Erfindung zum Herstellen einer gebogenen Substratscheibe 1 mit einem darauf erzeugten Hologramm. Ein möglicher Verfahrensablauf wird nachfolgend anhand des in Fig. 2a-2d illustrierten spezifischen Beispiels für die weiter oben beschriebene zweite Ausführungsform des Verfahrens erläutert. Die in diesem Beispiel hergestellte gebogene Substratscheibe 1 mit Hologramm kann insbesondere als Bestandteil einer zukünftigen Fahrzeugscheibe, beispielsweise einer Frontscheibe eines Kraftfahrzeugs (nicht dargestellt), dienen. Beim Hologramm kann es sich insbesondere um ein holografisch optisches Element (HOE) handeln, das als Element einer Blickfeldanzeigevorrichtung in der Frontscheibe des Fahrzeugs integriert werden soll.

Figuren 2a bis 2d zeigen, jeweils in stark vereinfachten schematischen vertikalen Querschnittsansichten, vier bei der Durchführung des Verfahrens gemäß Fig. 1 nacheinander vorliegende gegenseitige Anordnungen einer gebogenen Substratscheibe 1 und eines zur Herstellung der Substratscheibe 1 und des Hologramms verwendeten Formwerkzeugs, das eine erste Formwerkzeughälfte 2, eine daran trennbar fixierbare gegenüberliegende zweite Formwerkzeughälfte 3 und gegebenenfalls eine die erste Formwerkzeughälfte 2 zur Hologrammherstellung zu ersetzende weitere Formwerkzeughälfte 4 umfasst.

In diesem Beispiel beginnt das Verfahren gemäß Fig. 1 mit einem Schritt S1, der in Fig. 2a schematisch veranschaulicht ist und bei dem die genannte dreidimensional gebogene Substratscheibe 1 aus Kunststoff durch Umformen, Spritzgießen oder Spritzprägen zwischen der ersten Formwerkzeughälfte 2, deren werkzeuginnenseitige Oberfläche 5 eine vorbestimmte gebogene Soll-Geometrie einer mit dem Hologramm auszustattenden Substratoberfläche 6 definiert, und einer an der ersten Formwerkzeughälfte 2 trennbar fixierten zweiten Formwerkzeughälfte 3, die eine von der Substratoberfläche 6 abgewandte Rückseite 7 der Substratscheibe 1 (Substratrückseite) definiert, hergestellt wird.

Wie in Fig. 2b veranschaulicht, wird die erste Formwerkzeughälfte 2 nach Fertigstellung der gebogenen Substratscheibe 1 im Formwerkzeug bei einem weiteren Schritt S2 von der zweiten Formwerkzeughälfte 3, in der die Substratscheibe 1 weiterhin verbleibt, abgenommen und in diesem Beispiel durch eine weitere Formwerkzeughälfte 4 ersetzt, in/auf deren dieselbe vorbestimmte Soll-Geometrie definierenden werkzeuginnenseitigen Oberfläche 8 ein Holografie-Master 9 integriert ist. Der Holografie-Master 9 ist beispielsweise als ein Oberflächenhologramm ausgebildet und folgt der vorbestimmten Soll-Geometrie der werkzeuginnenseitigen Oberfläche 8. In Fig. 2b deckt der Holografie-Master 9 nur einen Teilabschnitt der werkzeuginnenseitigen Oberfläche 8 ab, alternativ kann er beim vorliegenden Verfahren aber auch die gesamte werkzeuginnenseitigen Oberfläche 8 abdecken, um ein sich über die gesamte Substratoberfläche 6 erstreckendes Hologramm zu erzeugen.

Dabei wird die weitere Formwerkzeughälfte 4 mit dem darin integrierten Holografie-Master 9 an der zweiten Formwerkzeughälfte 3 derart fixiert, dass ein leerer Spalt 10 einer vorbestimmten konstanten Dicke von beispielsweise etwa 0,1 mm zwischen dem Holografie-Master 9 und der Substratoberfläche 6 bleibt.

Wie in Fig. 2c veranschaulicht, wird bei einem nachfolgenden Schritt S3 der Spalt 10 mit einem Hologrammaufnahmematerial, in diesem Beispiel einem flüssigen Fotopolymer, beispielsweise durch Injektion ausgefüllt, so dass eine Hologrammaufnahmeschicht 11 mit einer der Spaltdicke entsprechenden konstanten Schichtdicke und mit einem durchgehenden Flächenkontakt zum Holografie-Master 9 auf der Substratoberfläche 6 gebildet wird. In diesem Beispiel erstreckt sich der Spalt 10 und damit auch die Hologrammaufnahmeschicht 11 rein beispielhaft über die gesamte Substratoberfläche 6, alternativ kann er/sie sich aber auch lediglich über eine Teilfläche der Substratoberfläche 6 erstrecken.

Wie in Fig. 2d veranschaulicht, wird bei einem nachfolgenden optionalen Schritt S4 gemäß der genannten zweiten Ausführungsform des Verfahrens die zweite Formwerkzeughälfte 3 von der Rückseite 7 der Substratscheibe 1 entfernt, wobei die Substratscheibe 1 in der in Fig. 2c hergestellten Hologrammaufnahmeposition bezüglich der weiteren Formwerkzeughälfte 4 und dem darin integrierten Holografie-Master 9 fixiert bleibt. Anschließend wird in einem Schritt S5 das Belichten der Hologrammaufnahmeschicht 11 mit kohärentem Licht in dieser Hologrammaufnahmeposition durch die Substratscheibe 1 hindurch mittels einer hinter deren Rückseite 7 angeordneten Lichtquelle 12 durchgeführt.

Alternativ kann gemäß der weiter oben beschriebenen ersten Ausführungsform des Verfahrens der optionale Schritt S4 weggelassen (daher in Fig. 1 nur gestrichelt angedeutet) und das Belichten der Hologrammaufnahmeschicht 11 beim Schritt S5 in einem geschlossenen Zustand des Formwerkzeugs durchgeführt werden, bei dem die gebogene Substratscheibe 1 mit der darauf gebildeten Hologrammaufnahmeschicht 11 zwischen den beiden aneinander gemäß Fig. 2c fixierten Formwerkzeughälften 3 und 4 fixiert ist, d. h. zwischen der weiteren Formwerkzeughälfte 4, in der der Holografie-Master 9 integriert ist, und der zweiten Formwerkzeughälfte 3, in der die Substratscheibe 1 hergestellt worden ist und noch nicht daraus entnommen wurde. Dabei können in der zweiten Formwerkzeughälfte 3 geeignete Belichtungselemente (nicht gezeigt), insbesondere Lichtleiter wie Glasfaser und/oder eine geeignete Belichtungsoptik an sich bekannter Art, integriert sein, die zum Belichten der Hologrammaufnahmeschicht 11 mit einem kohärenten Licht zum Ausbilden eines durch den Holografie-Master 9 definierten Hologramms ausgebildet sind.

Bei beiden Ausführungsformen kann mithilfe des Formwerkzeugs wie beschrieben in einer zuverlässigen Weise eine für die vorliegende Hologrammaufnahmemethode erforderliche Hologrammaufnahmeanordnung gewährleistet werden, bei der der Holografie-Master 9 für die Dauer der Hologrammaufnahme in einem durchgehenden Flächenkontakt mit der Hologrammaufnahmeschicht 11 steht und ein vorbestimmter konstanter Abstand zwischen Holografie-Master 9 und Substratoberfläche 6 mit einer erforderlichen Genauigkeit von insbesondere unter 10 Mikrometern eingestellt ist, der der genannten konstanten Schichtdicke der Hologrammaufnahmeschicht 11 entspricht.

Durch die Belichtung beim Schritt S5 und eine gegebenenfalls anschließende Fixierung mit UV-Licht härtet das flüssige Fotopolymer aus. Nach der beschriebenen Fertigstellung des Hologramms in der Hologrammaufnahmeschicht 11 wird der Holografie-Master 9 in einem abschließenden Schritt S6 von dieser wieder entfernt, indem die weitere Formwerkzeughälfte 4, die den Holografie-Master 9 trägt, von der Substratscheibe 1 entfernt wird. Das fertige Produkt umfasst nach dem Entfernen beider Formwerkzeughälften 3 und 4 die gebogene Substratscheibe 1 mit der auf deren Substratoberfläche 6 ausgebildeten und mit dieser verbundenen Hologrammaufnahmeschicht 11, in der das Hologramm ausgebildet ist.

### Bezugszeichenliste

- 1: gebogene Substratscheibe
- 2: erste Formwerkzeughälfte
- 3: zweite Formwerkzeughälfte
- 4: weitere Formwerkzeughälfte
- 5: werkzeuginnenseitige Oberfläche der ersten Formwerkzeughälfte, die die vorbestimmte gebogene Soll-Geometrie der Substratoberfläche definiert
- 6: Substratoberfläche
- 7: Rückseite der gebogenen Substratscheibe
- 8: werkzeuginnenseitige Oberfläche der weiteren Formwerkzeughälfte, die die vorbestimmte gebogene Soll-Geometrie der Substratoberfläche definiert
- 9: Holografie-Master
- 10: Spalt
- 11: Hologrammaufnahmeschicht
- 12: Lichtquelle für kohärentes Licht

## Patentansprüche

1. Verfahren zum Herstellen einer gebogenen Substratscheibe (1) mit einem Hologramm, mit den Schritten:
- Herstellen (S1) einer gebogenen Substratscheibe (1) aus Kunststoff durch Umformen, Spritzgießen oder Spritzprägen zwischen einer ersten Formwerkzeughälfte (2), die eine vorbestimmte Soll-Geometrie einer Substratoberfläche (6) definiert, und einer an der ersten Formwerkzeughälfte (2) trennbar fixierten zweiten Formwerkzeughälfte (3);
- Abnehmen der ersten Formwerkzeughälfte (2) von der zweiten Formwerkzeughälfte (3), in der die hergestellte Substratscheibe (1) verbleibt, und Aufbringen eines Holografie-Masters (9) in Form einer Dünnschicht auf eine die Soll-Geometrie definierende Oberfläche (5; 8) der ersten oder einer weiteren Formwerkzeughälfte (2; 4);
- Fixieren (S2) der ersten bzw. weiteren Formwerkzeughälfte (2, 4) mit dem Holografie-Master (9) an der zweiten Formwerkzeughälfte (3) derart, dass ein leerer Spalt (10) einer vorbestimmten konstanten Dicke zwischen dem Holografie-Master (9) und der Substratoberfläche (6) bleibt, und Ausfüllen (S3) dieses Spalts (10) mit einem Hologrammaufnahmematerial;
- Belichten (S5) der dadurch gebildeten Hologrammaufnahmeschicht (11) zwischen der Substratoberfläche (6) und dem Holografie-Master (9) mit einem kohärenten Licht zum Ausbilden eines durch den Holografie-Master (9) definierten Hologramms.

2. Verfahren nach Anspruch 1, wobei
- das Hologramm als ein holografisch optisches Element ausgebildet ist.

3. Verfahren nach Anspruch 1 oder 2, wobei
- der Spalt (10) mit dem Hologrammaufnahmematerial in Form eines flüssigen Fotopolymers ausgefüllt wird.

4. Verfahren nach einem der Ansprüche 1 bis 3, wobei
- das Belichten (S5) der Hologrammaufnahmeschicht (11) in einem geschlossenen Zustand des Formwerkzeugs durchgeführt wird, bei dem die Substratscheibe (1) zwischen den beiden aneinander fixierten Formwerkzeughälften (2, 3; 4, 3) fixiert ist.

5. Verfahren nach Anspruch 4, wobei
- in der zweiten Formwerkzeughälfte (3) und/oder in der ersten/weiteren Formwerkzeughälfte (2; 4) geeignete Belichtungselemente integriert sind, die zum Belichten der Hologrammaufnahmeschicht (11) mit einem kohärenten Licht zum Ausbilden eines durch den Holografie-Master (9) definierten Hologramms ausgebildet sind.

6. Verfahren nach Anspruch 5, wobei
- die Belichtungselemente als Lichtleiter und/oder optische Elemente ausgebildet sind.

7. Verfahren nach einem der Ansprüche 1 bis 3, wobei
- die Substratscheibe (1) nach dem Einbringen des Hologrammaufnahmematerials in den zwischen der Substratoberfläche (6) und dem Holografie-Master (9) gebildeten Spalt (10) in dieser Hologrammaufnahmeposition bezüglich der ersten bzw. weiteren Formwerkzeughälfte (2; 4) gehalten oder fixiert wird, während die zweite Formwerkzeughälfte (3) von einer Rückseite (7) der Substratscheibe (1) entfernt wird und
- das Belichten der Hologrammaufnahmeschicht (11) in dieser Hologrammaufnahmeposition durch die Substratscheibe (1) hindurch mittels einer an oder hinter deren Rückseite (7) angeordneten Lichtquelle (12) durchgeführt wird.

8. Gebogene Substratscheibe (1), die gemäß einem Verfahren nach einem der vorhergehenden Ansprüche mit einem auf deren Substratoberfläche (6) erzeugten Hologramm hergestellt wurde und zum Einsatz als fester Bestandteil einer Fahrzeugscheibe ausgebildet ist.

9. Fahrzeugscheibe, die als ein Scheibenverbund ausgebildet ist, der Folgendes umfasst:
- eine gebogene Substratscheibe (1) mit einem darauf hergestellten Hologramm gemäß Anspruch 8 als eine erste Scheibe des Scheibenverbunds und
- eine zweite Scheibe, die mit der ersten Scheibe durch eine dazwischen liegende Verbindungsschicht verbunden ist, wobei das Hologramm auf einer der zweiten Scheibe zugewandten Oberfläche der ersten Scheibe ausgebildet ist.

10. Fahrzeug mit einer Fahrzeugscheibe gemäß Anspruch 9, wobei
- die erste Scheibe eine näher oder direkt an einem Fahrzeuginnenraum liegende Innenscheibe der Fahrzeugscheibe und die zweite Scheibe eine näher oder direkt an der Außenumgebung des Fahrzeugs liegende Außenscheibe der Fahrzeugscheibe ist.

## Claims

1. Method of producing a curved substrate pane (1) having a hologram, having the steps of:
- producing (S1) a curved substrate pane (1) from plastic by primary forming, injection moulding or injection compression moulding between a first mould half (2) that defines a predetermined target geometry of a substrate surface (6) and a second mould half (3) separably fixed to the first mould half (2);
- removing the first mould half (2) from the second mould half (3) in which the substrate pane (1) produced remains, and applying a holography master (9) in the form of a thin layer to a surface (5; 8) defining the target geometry in the first or a further mould half (2; 4);
- fixing (S2) the first or further mould half (2, 4) having the holography master (9) on the second mould half (3) in such a way as to leave an empty gap (10) of a predetermined constant thickness between the holography master (9) and the substrate surface (6), and filling (S3) this gap (10) with a hologram recording material;
- exposing (S5) the hologram recording layer (11) formed thereby between the substrate surface (6) and the holography master (9) with a coherent light to form a hologram defined by the holography master (9).

2. Method according to Claim 1, wherein
- the hologram is in the form of a holographic optical element.

3. Method according to Claim 1 or 2, wherein
- the gap (10) is filled with the hologram recording material in the form of a liquid photopolymer.

4. Method according to any of Claims 1 to 3, wherein
- the exposing (S5) of the hologram recording layer (11) is conducted in a closed state of the mould in which the substrate pane (1) is fixed between the two mould halves (2, 3; 4, 3) fixed to one another.

5. Method according to Claim 4, wherein
- integrated in the second mould half (3) and/or in the first/further mould half (2; 4) are suitable exposure elements that are designed for exposure of the hologram recording layer (11) with a coherent light to form a hologram defined by the holography master (9).

6. Method according to Claim 5, wherein
- the exposure elements are in the form of optical fibres and/or optical elements.

7. Method according to any of Claims 1 to 3, wherein
- the substrate pane (1), after the hologram recording material has been introduced into the gap (10) formed between the substrate surface (6) and the holography master (9), is held or fixed in this hologram recording position with respect to the first or further mould half (2; 4), while the second mould half (3) is removed from a reverse side (7) of the substrate pane (1) and
- the exposure of the hologram recording layer (11) is conducted in this hologram recording position through the substrate pane (1) by means of a light source (12) disposed at or behind the reverse side (7) thereof.

8. Curved substrate pane (1) produced by a method according to any of the preceding claims, with a hologram created on the substrate surface (6) thereof, and designed for use as a fixed constituent of a vehicle windowpane.

9. Vehicle windowpane in the form of a pane composite, comprising:
- a curved substrate pane (1) with a hologram according to Claim 8 produced thereon as a first pane of the pane composite and
- a second pane bonded to the first pane by a bonding layer between the two, wherein the hologram is formed on a surface of the first pane facing the second pane.

10. Vehicle having a vehicle windowpane according to Claim **9,** wherein
- the first pane is an inner pane of the vehicle windowpane lying closer to or directly adjoining a vehicle interior, and the second pane is an outer pane of the vehicle windowpane lying closer or directly adjoining the exterior environment of the vehicle.

## Revendications

1. Procédé de fabrication d'un disque de substrat incurvé (1) avec un hologramme, comprenant les étapes suivantes :
- fabriquer (S1) un disque de substrat incurvé (1) en matière plastique par formage, moulage par injection ou moulage par injection-compression entre une première moitié de moule (2) qui définit une géométrie souhaitée prédéterminée d'une surface de substrat (6) et une deuxième moitié de moule (3) fixée de manière séparable à la première moitié de moule (2) ;
- retirer la première moitié de moule (2) par rapport à la deuxième moitié de moule (3), dans laquelle se trouve le disque de substrat (1) fabriqué, et appliquer un maître holographique (9) sous la forme d'une couche mince sur une surface (5 ; 8) de la première ou d'une autre moitié de moule (2 ; 4) définissant la géométrie souhaitée ;
- fixer (S2) la première ou l'autre moitié de moule (2, 4) avec le maître holographique (9) sur la deuxième moitié de moule (3) de telle sorte qu'un espace vide (10) d'une épaisseur constante prédéterminée reste entre le maître holographique (9) et la surface du substrat (6), et remplir (S3) cet espace (10) avec un matériau d'enregistrement d'hologrammes ;
- exposer (S5) la couche d'enregistrement d'hologramme (11) ainsi formée entre la surface du substrat (6) et le maître holographique (9) à une lumière cohérente afin de former un hologramme défini par le maître holographique (9).

2. Procédé selon la revendication 1, dans lequel
- l'hologramme est réalisé sous la forme d'un élément optique holographique.

3. Procédé selon la revendication 1 ou la revendication 2, dans lequel
- l'espace (10) est rempli avec le matériau d'enregistrement d'hologrammes sous la forme d'un photopolymère liquide.

4. Procédé selon l'une des revendications 1 à 3, dans lequel
- l'exposition (S5) de la couche d'enregistrement d'hologramme (11) est réalisée dans un état fermé du moule, dans lequel le disque de substrat (1) est fixé entre les deux moitiés de moule (2, 3 ; 4, 3) fixées l'une à l'autre.

5. Procédé selon la revendication 4, dans lequel
- des éléments d'exposition appropriés sont intégrés dans la deuxième moitié de moule (3) et/ou dans la première/autre moitié de moule (2 ; 4), lesquels sont conçus pour exposer la couche d'enregistrement d'hologrammes (11) à une lumière cohérente afin de former un hologramme défini par le maître holographique (9).

6. Procédé selon la revendication 5, dans lequel
- les éléments d'exposition sont conçus sous la forme de guides de lumière et/ou d'éléments optiques.

7. Procédé selon l'une des revendications 1 à 3, dans lequel
- le disque de substrat (1), après introduction du matériau d'enregistrement d'hologrammes dans l'espace (10) formé entre la surface de substrat (6) et le maître holographique (9), est maintenu ou fixé dans cette position d'enregistrement d'hologrammes par rapport à la première ou aux autres moitiés du moule (2 ; 4), tandis que la deuxième moitié (3) du moule est retirée d'un côté arrière (7) du disque de substrat (1), et
- l'exposition de la couche d'enregistrement d'hologramme (11) dans cette position d'enregistrement d'hologramme est réalisée à travers le disque de substrat (1) au moyen d'une source de lumière (12) disposée sur son côté arrière (7) ou derrière celui-ci.

8. Disque de substrat incurvé (1) qui a été fabriqué selon un procédé selon l'une des revendications précédentes avec un hologramme produit sur sa surface de substrat (6) et qui est conçu pour être utilisé comme composant fixe d'un vitrage de véhicule.

9. Vitrage de véhicule qui est conçu sous la forme d'un vitrage composite comprenant :
- un disque de substrat incurvé (1) avec un hologramme réalisé sur elle selon la revendication 8, en tant que première vitre du vitrage composite, et
- une deuxième vitre reliée à la première vitre par une couche de liaison intercalée, l'hologramme étant formé sur une surface de la première vitre tournée vers la deuxième vitre.

10. Véhicule comprenant un vitrage de véhicule selon la revendication 9, dans lequel
- la première vitre est une vitre intérieure du vitrage de véhicule située plus près ou directement à l'intérieur d'un habitacle de véhicule et la deuxième vitre est une vitre extérieure du vitrage de véhicule située plus près ou directement à l'extérieur du véhicule.
